Europäisches Patentamt

European Patent Office

Office européen des brevets

(19)

(11) Veröffentlichungsnummer: **0 287 952**
**B1**

(12) **EUROPÄISCHE PATENTSCHRIFT**

(45) Veröffentlichungstag der Patentschrift: 16.01.91

(51) Int. Cl.⁵: **C 01 B 21/14**

(21) Anmeldenummer: **88105960.4**

(22) Anmeldetag: **14.04.88**

(54) **Verfahren zur Herstellung von Hydroxylammoniumsalzen.**

(30) Priorität: **24.04.87 DE 3713733**

(43) Veröffentlichungstag der Anmeldung:
**26.10.88 Patentblatt 88/43**

(45) Bekanntmachung des Hinweises auf die
Patenterteilung:
**16.01.91 Patentblatt 91/03**

(84) Benannte Vertragsstaaten:
**BE DE ES FR GB IT NL**

(56) Entgegenhaltungen:
**EP-A-0 000 901**
**DE-A-2 447 972**
**DE-A-2 520 734**
**DE-B-1 088 037**

(73) Patentinhaber: **BASF Aktiengesellschaft**
**Carl-Bosch-Strasse 38**
**D-6700 Ludwigshafen (DE)**

(72) Erfinder: **Fuchs, Hugo, Dr.**
**Egellstrasse 28**
**D-6700 Ludwigshafen (DE)**
Erfinder: **Ritz, Josef, Dr.**
**Osloer Weg 8**
**D-6700 Ludwigshafen (DE)**
Erfinder: **Thomas, Erwin**
**Borngasse 12**
**D-6713 Freinsheim (DE)**
Erfinder: **Weiss, Franz-Josef, Dr.**
**Schilfweg 1**
**D-6708 Neuhofen (DE)**

**Beschreibung**

Hydroxylammoniumsalze werden im großtechnischen Maßstab durch Reduktion von Stickstoffmonoxid mit Wasserstoff in Gegenwart von suspendierten Platinkatalysatoren in wäßrigen Mineralsäuren hergestellt. Es wurden schon viele Versuche unternommen, die Aktivität des verwendeten Platinkatalysators so zu beeinflussen, daß die Reduktion von Stickstoffmonoxid unter Bildung von Hydroxylammoniumsalzen verläuft und eine Reduktion zu den Nebenprodukten wie Ammoniumsalzen oder Distickstoffoxid vermindert wird.

Aus der DE—PS 956 038 ist bereits bekannt, daß man Platinkatalysatoren mit vergiftenden Mitteln wie Schwefel, Selen, Arsen oder Tellur versieht um die Bildung von Hydroxylammoniumsalzen zu bevorzugen. Auch nach den in der DE—PS 21 00 036 und DE—OS 25 00 866 beschriebenen Verfahren wurde schon versucht, die Ausbeute an Hydroxylammoniumsalzen durch Vergiftung der verwendeten Platinkatalysatoren mit Schwefel zu verbessern. Diese Verfahren sind jedoch noch verbesserungsbedürftig.

Entsprechend der DE—OS 25 20 734 werden für die Reduktion von Stickstoffmonoxid mit Wasserstoff in wäßrigen Mineralsäuren Platinkatalysatoren verwendet, die mit Selen vergiftet sind. Dieses Verfahren hat jedoch den Nachteil, daß der so vergiftete Katalysator nur bei Säurekonzentrationen über 2 n wirksam ist. Dies hat zur Folge, daß die Reaktion bei einer Säurekonzentration von 2 n abgebrochen werden muß und erhebliche Mengen restlicher Mineralsäure im Gemisch mit Hydroxylammoniumsalzen vorliegen. Bei der weiteren Verarbeitung zu Oximen ist dieser Säuregehalt sehr störend.

Wie aus der DE—PS 1 088 037 bekannt ist, wurde auch schon versucht, die Herstellung von Platinkatalysatoren durch stufenweise Reduktion von Platin IV über Platin II Verbindungen und Fällen von metallischem Platin auf Träger zu verbessern, um die Reduktion von Stickstoffmonoxid in die gewünschte Richtung zu lenken. Es hat sich jedoch herausgestellt, daß solche Katalysatoren ebenso wie die vorgennanten bei längerem Gebrauch in ihrer Aktivität vermindert werden und zur Bildung von erhöhten Mengen an Nebenprodukten Anlaß geben.

Es war deshalb die technische Aufgabe gestellt, bei der Herstellung von Hydroxylammoniumsalzen durch katalytische Reduktion von Stickstoffmonoxid mit Wasserstoff die Katalysatoren so zu modifizieren, daß die Bildung von Nebenprodukten möglichst weitgehend unterdrückt wird, dies auch bei niedrigen Säurekonzentrationen und die Katalysatoren über eine längere Zeit eine verbesserte Aktivität aufweisen.

Diese Aufgabe wird gelöst in einem Verfahren zur Herstellung von Hydroxylammoniumsalzen durch katalytische Reduktion von Stickstoffmonoxid mit Wasserstoff in verdünnten wäßrigen Lösungen von Mineralsäuren in Gegenwart von suspendierten Platin Trägerkatalysatoren, die mit Schwefel partiell vergiftet sind bei erhöhter Temperatur, wobei man Katalysatoren verwendet, die durch Fällen von metallischem Platin aus wäßrigen Platinlösungen auf Träger durch Reduktionsmittel in Gegenwart von organischen Chelatbildnern erhältlich sind.

Das neue Verfahren hat den Vorteil, daß die Bildung von Nebenprodukten bei der Hydroxylaminsynthese weitgehend unterbunden wird und die verwendeten Katalysatoren diese Eigenschaft auch bei Säurekonzentrationen unter 2 n behalten. Ferner hat das neue Verfahren den Vorteil, daß die verwendeten Katalysatoren eine verlängerte Lebensdauer aufweisen.

In der Regel hält man ein Molverhältnis von Wasserstoff zu Stickstoffmonoxid von 1,5:1 bis 6:1 ein. Besonders gute Ergebnisse erhält man, wenn man darauf achtet, daß in der Reaktionszone ein Molverhältnis von Wasserstoff zu Stickstoffmonoxid von 3,5 bis 5:1 aufrecht erhalten wird.

Vorteilhaft verwendet man als Säuren starke Mineralsäuren, wie Chlorwasserstoffsäure, Salpetersäure, Schwefelsäure oder Phosphorsäure. Geeignet sind auch deren sauren Salze wie Ammoniumbisulfat. Besonders bevorzugt wird Schwefelsäure, Ammoniumbisulfat oder Salpetersäure verwendet. In der Regel geht man von 4 bis 6 normalen wäßrigen Säuren aus und läßt im Verlauf der Reaktion die Säurekonzentration nicht unter 0,2 normal fallen.

Die Umsetzung führt man vorteilhaft bei Temperaturen von 30 bis 80°C durch. Besonders bewährt haben sich Temperaturen von 40 bis 60°C. In der Regel führt man die Umsetzung bei Atmosphärendruck oder erhöhtem Druck z.B. bis zu 30 bar durch. Besonders bewährt hat sich die erfindungsgemäße Arbeitsweise, wenn man die Umsetzung unter erhöhtem Druck durchführt, z.B. von 1,5 bis 20 bar.

Die Umsetzung wird in Gegenwart von Platinträger-Katalysatoren durchgeführt. Besonders bewährt haben sich Platin auf Kohleträger z.B. Aktivkohle insbesonderes auf Grafit. Vorzugsweise hat ein solcher Trägerkatalysator einen Gehalt von 0,1 bis 5 Gew.-% Platin, insbesondere 0,3 bis 0,6 Gew. % Platin. Man verwendet vorteilhaft Platin Trägerkatalysatoren, deren Anteile mit einer Korngröße <10 μm weniger als 10 Gew. % betragen. Vorzugsweise wird ein Platinträger-Katalysator mit einer Korngröße von 30 bis 90 μm verwendet. Die Feinanteile des Katalysators können unschwer durch geeignete Maßnahmen, z.B. Sieben entfernt werden.

Die verwendeten Platinträger-Katalysatoren sind partiell mit Schwefel vergiftet. Vorteilhaft beträgt der Schwefelgehalt 1 bis 50 Atom%, insbesondere 3 bis 30 Atom% bezogen auf das eingesetzte Platinmetall. Der Schwefel kann dem Katalysator bei seiner Herstellung in Form von geeigneten Verbindungen wie Alkalidithionit, Alkalisulfid, Derivaten der Sulfoxylsäure mit Formaldehyd, schweflige Säure oder Alkalisulfit zugesetzt werden aus denen sie bei der Reduktion zu Schwefel reduziert werden. Die reduzierbaren Schwefelverbindungen können aber auch den platinmetallhaltigen Katalysatoren nach deren Herstellung zugesetzt werden.

Vorteilhaft enthalten die verwendeten Platinträger-Katalysatoren zusätzlich Selen als verfigtendes Mittel. Vorteilhaft beträgt der Selengehalt 0,1 bis 10 Atom% insbesondere 0,5 bis 5 Atom%. Selen kann den Katalysatoren bei ihrer Herstellung oder den fertigen Katalysatoren in Form geeigneter Verbindungen wie Selendioxid, Selenige Säure oder Selensäure zugesetzt werden aus denen sie bei der Reduktion zu Selen reduziert werden.

Erfindungsgemäß werden Katalysatoren verwendet, die durch Fällen von metallischem Platin aus wäßrigen Platinlösungen auf Träger durch Reduktionsmittel in Gegenwart von organischen Chelatbildnern erhältlich sind. In der Regel geht man hierbei von wäßrigen Lösungen von Hexachloroplatinsäure oder Tetrachloroplatinsäure oder deren Salze aus. Vorteilhaft wird vor Zugabe der Chelatbildner die Lösung auf einen pH-Wert von 4,6 bis 6 z.B. durch Zugabe von Alkalihydroxid eingestellt. Besonders bewährt hat es sich, wenn man die Lösung auf den genannten pH-Wert puffert, z.B. durch zusätzlich Zugabe von Alkaliacetaten. Solchen Platin enthaltenden Lösungen werden organische Chelatbildner, insbesondere niedermolekulare Chelatbildner mit einem Molgewicht bis zu 500, zugesetzt. Vorteilhaft verwendet man 0,1 bis 2 Mol% insbesondere 0,1 bis 1,5 Mol% organische Chelatbildner bezogen auf Platin an. In der Regel verwendet man 2 bis 4-zähnige organische Chelatbildner.

Geeignete Chelatbildner sind beispielsweise α oder β-Hydroxycarbonylverbindungen wie Hydroxycarbonsäure, Hydroxyketone oder Hydroxyaldehyde. Beispielhaft seien genannt die Glykolsäure oder Salizylsäure. Geeignet sind auch Aminocarbonsäuren, insbesondere α oder β-Aminocarbonsäuren wie Glycin oder Serin. Ferner 1,3-Diketone wie Acetylaceton. Andere geeignete Chelatbildner sind 2,2'-Dipyridyl, 1,10-Phenantrolin oder 1,2-Diamine wie Ethylendiamin und analoge Diamine. Geeignet ist auch o-Aminophenol, ferner Hydroxylgruppen enthaltende aromatische Amine wie 8-Hydroxychinolin oder β-Hydroxychinaldin. Weitere geeignete Chelatbildner sind Hydroxyaldoxime wie Salicylaldoxim oder Hydroxyketoxime wie o-Hydroxyacetophenonoxim. Ferner sind als Chelatbildner geeignet Aminopolycarbonsäuren wie Nitrilotriessigsäure, Ethylendinitrilotetraessigsäure, Ethylendinitrilotetraessigsäure als Dinatriumsalz sowie Cyclohexan-1,2-dinitrilotetraessigsäure ferner Diethylentriaminpentaessigsäure. Bevorzugt werden Aminopolycarbonsäuren als Chelatbildner verwendet. Geeignete Chelatbildner werden beschrieben in Dwyer and Mellor "Chelating Agents and Metalchelates" Academic Press London 1965, Seiten 95 bis 181.

In der Platin enthaltenden Lösung wird der anzuwendende Träger suspendiert. Das Einbringen des Trägers kann von Anfang an erfolgen oder vor dem Ausfällen des löslichen Platins mittels Reduktionsmitteln. Es hat sich als vorteilhaft erwiesen, den Träger von Anfang an in der Platin enthaltenden wäßrigen Lösung zu suspendieren. Metallisches Platin wird auf dem Träger mittels Reduktionsmitteln die Platin bis zu metallischem Platin reduzieren, ausgefällt. Geeignete Reduktionsmittel sind beispielsweise Hydrazin, Formaldehyd, Ameisensäure oder Formiate. Die Verwendung von Ameisensäure hat sich besonders bewährt. Vorteilhaft wendet man je gAtom Platin 100 bis 1000 Mol Reduktionsmittel an. Vorteilhaft hält man bei der Reduktion zum metallischem Platin eine Temperatur von 60 bis 90°C ein. Nach beendeter Reduktion wird der suspendierte Katalysator abfiltriert und zweckmäßig mit Wasser ausgewaschen.

Besonders bewährt hat es sich, wenn man von Hexachloroplatinatlösungen ausgeht, diese auf einen pH-Wert von 4,6 bis 6,0 neutralisiert und mit Natriumacetat puffert, das 4-wertige Platin durch Zugabe einer äquivalenten Menge Dithionit zu Platin II reduziert und durch eine zusätzliche Menge Dithionit die Vergiftung mit Schwefel durchführt, wobei der Zusatz von Chelatbildnern und gegebenenfalls Selenverbindungen als weitere vergiftende Mittel vor oder nach der Reduktion zu Platin II zu der gepufferten Lösung erfolgen kann und anschließend die Fällung von metallischem Platin durch starke Reduktionsmittel auf das Trägermaterial erfolgt.

Bei der Herstellung von Hydroxylammoniumnitrat hat es sich besonders bewährt, wenn man den Katalysator vor Beginn der Reaktion in Wasser suspendiert mit Wasserstoff behandelt und während der Umsetzung eine Konzentration an Salpetersäure zwischen 1 und 2 Äquivalenten/Liter durch Zugeben von Salpetersäure einhält und am Schluß der Reaktion die Konzentration an freier Säure auf 0,1 bis 0,3 n abfallen läßt. Eine geeignete Arbeitsweise wird beispielsweise beschrieben in der DE—PS 21 00 036.

Hydroxylammoniumsalze eignen sich zur Herstellung von Oximen z.B. Cyclohexanonoxim, einem wichtigen Ausgangsstoff für Caprolactam.

Das Verfahren nach der Erfindung sei in folgenden Beispielen veranschaulicht:

1. Beispiel

640 g Graphit werden bei Raumtemperatur mit 10%iger $HNO_3$ 2-mal gereinigt, getrocknet, dann mit 500 ml $H_2O$, 100 ml Königswasser und 8,5 g $H_2[PTCl_6] \cdot 6H_2O$ (3,2 g Platin) über Nacht bei 80°C gerührt.

Dann wird mit 400 ml $H_2O$ verdünnt, auf 30°C abgekühlt, mit Soda neutralisiert bis pH=5,2, und mit Natriumacetat gepuffert. Nun werden 31,4 mg Nitrilotriessigsäure, gelöst in wenig $H_2O$, zugegeben. Danach wird so viel Natriumdithionit-Lösung zugefügt, bis $Pt^{4+}$ zu $Pt^{2+}$ reduziert wurde. Zur Vergiftung des Katalysators mit Schwefel wird Natriumdithionit im Überschuß von 20 Mol% über die zur Reduktion von $Pt^{4+}$ zu $Pt^{2+}$ erforderlichen Menge zugegeben. Anschließend wird mit 100 ml 99%iger Ameisensäure das Platin bei 80°C auf dem Graphit niedergeschlagen, abfiltriert und mit Wasser gewaschen.

Von dem auf diese Weise hergestellten Platin-Graphit-Katalysator werden 250 g, in einem Edelstahl-Rührkessel, in 3500 ml destilliertem $H_2O$ suspendiert. Nach der Aktivierung des Katalysators mit $H_2$ bei 40°C werden 500 ml $HNO_3$ 63%ig hinzugegeben und unter Rühren stündlich 230 Nl eines Gemisches aus 63 Vol.-% $H_2$ und 37 Vol.-% 96%iges Stickstoffmonoxid (Rest Stickstoff) eingeleitet. Die Reaktionstemperatur beträgt 40—42°C. Durch Zugabe von weiteren 1380 ml $HNO_3$ 63%ig wird eine Konzentration an freier Säure von 1,5 bis 1,8 n aufrecherhalten.

Nach Einleitung von insgesamt 1638 Nl des NO/$H_2$-Gemisches werden 5,83 l einer Hydroxylammoniumnitrat-Lösung erhalten mit 25,8 g/l freier $HNO_3$, 114,1 g/l $NH_2OH$ (als $NH_3OHNO_3$) und 2,8 g/l $NH_3$, gebunden als $NH_4NO_3$. Es werden insgesamt 305 N. Liter Abgas erhalten mit 77,3 Vol-% $H_2$, 11,5 Vol.-% NO, 5,0 Vol.-% $N_2O$, 6,2 Vol.-% $N_2$. Die Ausbeute wird auf umgesetztes NO bezogen und beträgt 92,2 mol.-% für $NH_2OH$.

2. Beispiel

640 g Graphit werden bei Raumtemperatur mit 10%iger $HNO_3$ 2-mal gereinigt, getrocknet, dann mit 500 ml $H_2O$, 100 ml Königswasser und 8,5 g $H_2[PtCl_6] \cdot 6H_2O$ über Nacht bei 80°C gerührt. Anschließend wird mit 400 ml $H_2O$ verdünnt, auf 30°C abgekühlt, mit Soda bis pH=5,2 neutralisiert, dann mit kristallinem Natriumacetat gepuffert. Nun werden 18,2 mg Selen (als $SeO_2$ gelöst in wenig $H_2O$) zugegeben. Danach gibt man 31,4 mg Nitrilotriessigsäure, gelöst in wenig $H_2O$, hinzu. Danach läßt man so viel Natriumdithionit-Lösung zufließen, bis $Pt^{4+}$ zu $Pt^{2+}$ reduziert wurde und dann wurde wie in Beispiel 1 ein Überschuß an Natriumdithionit zugegeben. Anschließend reduziert man mit 100 ml 99%iger Ameisensäure zu $Pt^0$. Von dem auf diese Weise hergestellten Platin-Graphit-Katalysator werden 250 g, in einem Edelstahl-Rührkessel, in 4500 ml destilliertem $H_2O$ suspendiert. Nach der Aktivierung des Katalysators mit $H_2$ bei 40°C werden 700 ml $HNO_3$ 63%ig hinzugegeben und unter Rühren stündlich 160 N. Liter eines Gemisches aus 66 Vol.-% $H_2$ und 34 Vol.-% 96%iges Stickoxid (Rest Stickstoff) eingeleitet. Die Reaktionstemperatur wird bei 40—42°C gehalten. Durch Zugabe von weiteren 2000 ml $HNO_3$ 63%ig wird eine Konzentration an freier Säure von 1,5 bis 1,8 N aufrecherhalten. Nach Einleitung von insgesamt 2230 N. Liter des NO/$H_2$-Gemisches, werden 8,25 Liter einer Hydroxylammoniumnitrat-Lösung mit 20,2 g/l freier $HNO_3$, 127,6 g/l $NH_2OH$ (als $NH_3OHNO_3$) und 2,4 g/l $NH_3$, gebunden als $NH_4NO_3$ erhalten. Es werden insgesamt 550 N. Liter Abgas erhalten mit 78,3 Vol.-% $H_2$, 13,6 Vol.-% NO, 3,6 Vol.-% $N_2O$ und 4,5 Vol.-% $N_2$. Die $NH_2OH$-Ausbeute wird auf umgesetztes NO bezogen und beträgt 88,9 mol.-%.

Patentansprüche

1. Verfahren zur Herstellung von Hydroxylammoniumsalzen durch katalytische Reduktion von Stickstoffmonoxid mit Wasserstoff in verdünnten wäßrigen Lösungen von Mineralsäuren in Gegenwart von suspendierten Platin-Trägerkatalysatoren, die mit Schwefel partiell vergiftet sind bei erhöhter Temperatur wobei man Katalysatoren verwendet, die durch Fällen von metallischem Platin aus einer wäßrigen Platinlösung auf Träger durch Reduktionsmittel in Gegenwart von organischen Chelatbildnern erhältlich sind.

2. Verfahren nach Anspruch 1, dadurch gekennzeichnet, daß man 0,1 bis 1,5 Mol% organische Chelatbildner bezogen auf Platinmetall anwendet.

3. Verfahren nach den Ansprüchen 1 und 2, dadurch gekennzeichnet, daß man Polyaminopolycarbonsäuren als Chelatbildner verwendet.

4. Verfahren nach den Ansprüchen 1 bis 3, dadurch gekennzeichnet, daß man die organischen Chelatbildner einer auf pH-Wert 4,6 bis 6,0 gepufferten wäßrigen Platinlösung zugibt.

5. Verfahren nach den Ansprüchen 1 bis 4, dadurch gekennzeichnet, daß die Platinträger-Katalysatoren zusätzlich mit Selen vergiftet sind.

Revendications

1. Procédé de préparation de sels d'hydroxylammonium par réduction catalytique de monoxyde d'azote avec de l'hydrogène dans en présene de catalyseurs supportés de platine en suspension qui sont partiellement empoisonnés au soufre, à température élevées, où on utilise des catalyseurs qui ont été préparés par précipitation de platine métallique sur un support à partir d'une solution aqueuse de platine à l'aide d'un réducteur en présence d'agents chélatants organiques.

2. Procédé selon la revendication 1, caractérisé en ce qu'on utilise 0,1 à 1,5% en moles d'agent chélatant organique par rapport au platine métallique.

3. Procédé selon l'une ou l'autre des revendications 1 et 2, caractérisé en ce qu'on utilise comme agent chélatant des acides polyaminopolycarboxyliques.

4. Procédé selon l'une quelconque des revendications 1 à 3, caractérisé en ce qu'on ajoute les agents chélatants organiques à une solution aqueuse de platine tamponnée à un pH de 4,6 à 6,0.

5. Procédé selon l'une quelconque des revendications 1 à 4, caractérisé en ce que les catalyseurs supportés de platine sont en outre empoisonnés au sélénium.

Claims

1. A process for preparing a hydroxylammonium salt by catalytic reduction of nitrogen monoxide with hydrogen at elevated temperature in a dilute aqueous solution of a mineral acid in the presence, in suspension, of a supported platinum catalyst obtainable by precipitating metallic platinum from an aqueous platinum solution onto a support by means of a reducing agent in the presence of an organic chelating agent and partially poisoned with sulfur.

2. A process as claimed in Claim 1, wherein from 0.1 to 1.5 mol% of organic chelating agent is used based on platinum metal.

3. A process as claimed in Claim 1 or 2, wherein the chelating agent used is an polyaminopolycarboxylic acid.

4. A process as claimed in any of Claims 1 to 3, wherein the organic chelating agent is added to an aqueous platinum solution buffered to pH 4.6—6.0.

5. A process as claimed in any of Claims 1 to 4, wherein the supported platinum catalyst has additionally been poisoned with selenium.